# EUROPEAN PATENT SPECIFICATION

(11) **EP 1 637 361 B1**
(45) Date of publication and mention of the grant of the patent: **20.08.2008**
(21) Application number: 04745566.2
(22) Date of filing: 03.06.2004
(51) Int. Cl.: B60C 17/02

(54) **AIR BLADDER FOR SAFETY TIRE**
LUFTSCHLAUCH FÜR SICHERHEITSREIFEN
VESSIE D'AIR POUR PNEU DE SECURITE

(30) Priority: 06.06.2003 JP 2003162550
(43) Date of publication of application: 22.03.2006
(73) Proprietor: Bridgestone Corporation, Tokyo 104-8340 (JP)
(72) Inventor: TANAKA, Yoshitaka c/o Bridgestone Corporation,,, Tokyo 187-8531 (JP)
(74) Representative: Whalley, Kevin
(86) International application number: PCT/JP2004/007710
(87) International publication number: WO 2004/108437

(56) References cited:
- WO-A-02/43975
- WO-A-02/094586
- WO-A-02/096678
- WO-A1-02/43975
- WO-A1-02/096678
- JP-A- 2002 530 236
- JP-A- 2003 159 913

## Description

This invention relates to an air bladder for a safety tire, which is used in safety tires capable of continuing safe running over a given distance even if a tire internal pressure is lowered or lost due to puncture of the tire or the like and extendedly deformed by the lowering of the tire internal pressure to subrogate the support of load from the tire.

Various safety tires have been proposed for responding to a demand of continuously and safely running the tire under loading to a place provided with an installation for exchanging or repairing the tire even if puncture of the tire, damage of an air valve or the like is caused to reduce or lose the tire internal pressure.

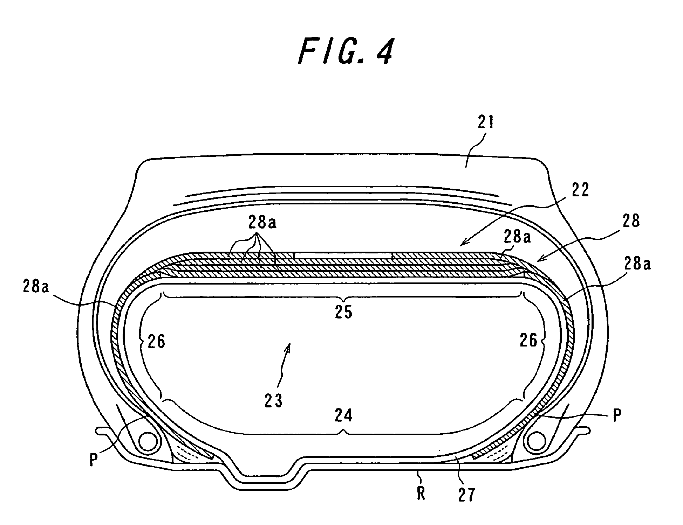

An example is a safety tire disclosed in International Publication 02/43975. As shown at a cross section in FIG. 4 of the accompanying drawings, a hollow toric air bladder 22 is housed in an interior of a tire 21. Such a safety tire is used by assembling the tire 21 into a standard rim R and filling a given internal pressure in the interior of the tire through a valve and also filling an internal pressure higher than the tire internal pressure in an interior of the air bladder 22 through a valve.

The air bladder 22 can be divided at its cross section into an extended deformation portion 23 and a non-deformation portion 24 bordering a point P located in the vicinity of a bead portion of the tire 21. The extended deformation portion 23 is a portion not contacting with an inner face of the tire 21 at a state of running under loading in the presence of the predetermined internal pressure of the tire 21 or during so-called normal running but extendedly deforming in circumferential and widthwise directions during so-called run-flat running such that a pressure difference between the inside and the outside of the air bladder 22 exceeds a predetermined value due to the decrease or losing of the tire internal pressure to thereby close to the inner face of the tire 21 over approximately the whole thereof, while the non-deformation portion 24 is a portion closing to inner faces of the tire 21 and the rim R to surely fix the air bladder 22 to the standard rim R in either the normal running and the run-flat running.

Also, the extended deformation portion 23 can be divided into a crown region 25 opposing to an inner face of a tread portion in the tire and a side region 26 at least opposing to an inner face of a sidewall portion in the tire. In the run-flat running, the crown region 25 is closed to the inner face of the tread portion and the side region 26 is closed to the inner face of the sidewall portion, whereby the air bladder 22 functions as in the conventional tire tube to subrogate the support of the load from the tire 21 while suppressing the flexible deformation of the tire 21 to a small level, and hence continued safe running can be realized in the puncture of the tire 21 or the like.

The air bladder 22 comprises a rubber tube body 27 having a hollow toric form and made of a soft rubber and a reinforcing layer 28 attached to an outside of the rubber tube body 27. The reinforcing layer 28 is constructed in the crown region 25 by laminating a plurality of non-woven fabric layers 28a each formed by coating a non-woven fabric made of aramide fibers or the like with rubber and in the side region 26 by using only one non-woven fabric layer 28 made of the same material.

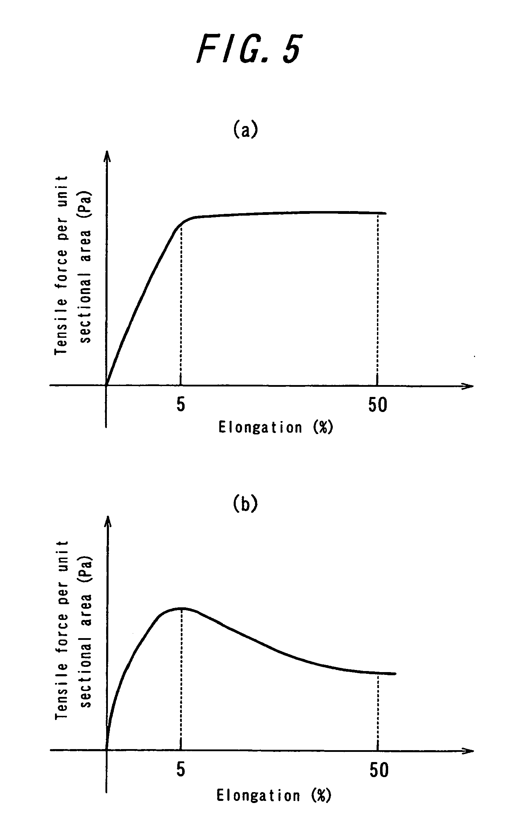

FIG. 5(a) is a graph showing a curve of tensile force to elongation in the extended deformation portion 23 having the above constructed reinforcing layer 28 in which an abscissa is an elongation and an ordinate is a tensile force per unit sectional area. This curve has a shape substantially changing in a form as shown within an elongation range up to an elongation of 50%. Concretely, as to the extended deformation portion 23 of the air bladder 22, an average gradient of the tensile force to an elongation of 0-5% expanding based on the supply of the internal pressure to the air bladder 22 is made larger than an average gradient of the tensile force to an elongation of 5-50% extendedly deforming the extended deformation portion 23 accompanied with the lowering of the tire internal pressure.

According to this construction, since the increasing ratio of the tensile force to the elongation in the extended deformation portion 23 of the air bladder 22 is large in the normal running of the tire 21, a large force against centrifugal force or the like can be given to the extended deformation portion, whereby contact of the air bladder 22 with the inner face of the tire 21 is prevented to ensure the durability in the normal running. On the other hand, when the extended deformation portion is extendedly deformed due to puncture of the tire or the like at an elongation exceeding 5%, the extended deformation portion 23 and hence the air bladder 22 can be sufficiently uniformly contacted with the whole of the inner face of the tire by smoothly and gently deforming the extended deformation portion 23 of the air bladder 22 with a small increasing ratio of the tensile force to the elongation.

On the contrary, when the extended deformation portion of the air bladder 22 is rapidly deformed in a puncture of the tire or the like, a portion locally and prematurely contacting with the inner face of the tire is produced in the extended deformation portion 23 of the air bladder, and hence an eccentric contact of the air bladder 22 with the inner face of the tire, bending of a part of the air bladder 22 and the like are apt to be easily caused. Once they are caused, an adequate contact state can not be obtained by the friction force between the air bladder 22 and the tire 21, the bending of the air bladder 22 and the like.

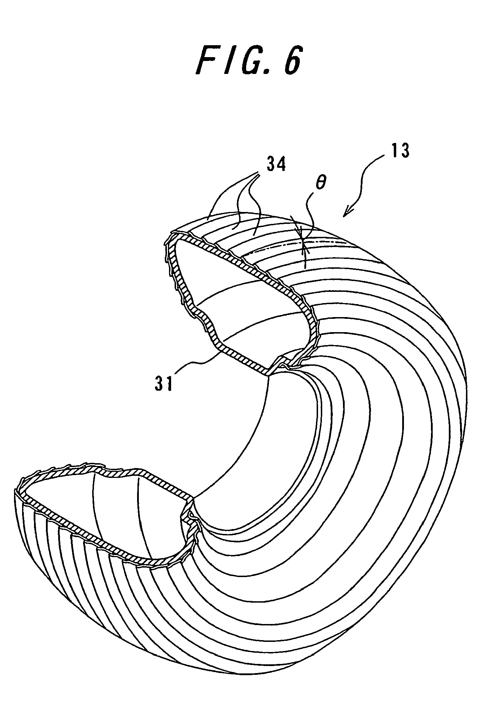

In the formation of the air bladder 22, an uncured reinforcing layer is attached to an uncured or cured rubber tube shaped body being the rubber tube body 27 and then cured. FIG. 6 is a partially cutaway view in perspective of a shaping example of a reinforcing layer shaped body 13 being an uncured reinforcing layer. In this case, a narrow-width strip forming a non-woven fabric layer 28a (see FIG. 4), preferably a strip 34 having a constant width within a range of 10-70 mm is extended on an outer peripheral face of a hard support member 31 having a given cross-sectional outer profile of approximately a toric form as a whole in substantially a circumferential direction of the support member 31 and spirally wound in a widthwise direction of the support member 31 without space over the whole of the predetermined region in the widthwise direction of the support member 31 to form a reinforcing layer shaped body 13 endlessly extending around the support member 31 and having a seamless structure on the circumference. Thereafter, the reinforcing layer shaped body 13 is removed from the support member 31 and attached to the outside of the rubber tube shaped body, which are cured to form an air bladder 22.

Instead of the case that the strip 34 is wound around the support member 31 to form the reinforcing layer shaped body 13 and then the shaped body is transferred and attached onto a rubber tube shaped body, the strip 34 may be directly wound on an uncured rubber tube shaped body to directly form the reinforcing layer shaped body thereon.

However, the air bladder 22 having the above construction has a problem in the production efficiency at the formation stages thereof in addition to its original function. That is, when the strip 34 is wound on the support member 31 or the rubber tube shaped body to form a portion of the reinforcing layer shaped body 13 corresponding to the side region 26 of the extended deformation portion 23, the widthwise direction of the strip 34 faces to the outside and the inside of the support member 31 or the rubber tube shaped body in the radial direction and the winding diameter of the strip 34 differs at left and right sides in the widthwise direction and hence it is required to conduct the winding while stretching the widthwise side end portion located at the radially outside of the support member 31 or the rubber tube shaped body. On the other hand, as to the product performances of the air bladder 22, the extended deformation portion 23 must have a large tensile force at the elongation of 5% as shown in the curve of tensile force of FIG. 5(a), so that the reinforcing layer shaped body 34 must take the same curve of tensile force as mentioned above as shown in FIG. 5(b), and as a result, a very large tension is required for largely stretching one side of the strip 34 in the widthwise direction and a long time required for the winding is accompanied therewith to largely lower the productivity. If the width of the strip 34 is made narrow for solving this problem, it is necessary to increase the winding number, which also results in lowering of the productivity.

The present invention is made considering the above problems and aims to provide an air bladder for a safety tire capable of maintaining high productivity and capable of closing the extended deformation portion to the inner face of the tire during run-flat running without contacting with the inner face of the tire during normal running of the tire.
Attention is also drawn to the disclosures of EP-A-1389540, EP-A-1398183, and EP-A-1338442.
The present invention provides an air bladder for a safety tire having a hollow toric form as a whole and housed in a tire and filled with an internal pressure and extendedly deforming based on the lowering of a tire internal pressure to subrogate the support of a load from the tire, in which an extended deformation portion of the air bladder comprises a crown region opposing to an inner face of a tread portion of the tire and a side region at least opposing to an inner face of a sidewall portion of the tire, and a curve of tensile force to an elongation in a circumferential direction up to an elongation of 50% has a shape changing from a sharp linear form in the vicinity of an elongation of 5% to a generally flat curved form in the crown region of the extended deformation portion and an upward sloping shape smoothly increasing with the increase of the elongation in the side region thereof;
wherein the extended deformation portion (3) of the air bladder is provided with a reinforcing layer in the crown region made of one or more layers of a composite body of a fiber material and rubber, wherein the fiber material is a non-woven fabric containing aramide fibers arranged in multi-directions, and with
a reinforcing layer in the side region made of one or more layers of a composite body of a fiber material and rubber, wherein the fiber material is a non-woven fabric containing nylon fibers or polyester fibers arranged in multi-directions.

In the conventional technique, as mentioned above, when the reinforcing layer at the side region is formed by winding the strip in the circumferential direction at different winding sizes in the widthwise direction of the strip, the winding should be carried out while stretching the widthwise end portion located at the outside of the support member or the rubber tube shaped body in the radial direction.

According to the invention, the curve of tensile force in an side region of the extended deformation portion is rendered into the upward sloping shape smoothly increasing with the increase of the elongation, so that a large tension is not required for stretching the widthwise side portion, and hence the time required for the winding of the strip can be shortened to improve the productivity.

Even if the curve of tensile force in the side region of the extended deformation portion is rendered into the upward sloping shape smoothly increasing with the increase of the elongation, since the tension bearing of the side region is smaller than that of the crown region, contact of the extended deformation portion with the inner face of the tire in the normal running is prevented, and the closing of such a portion to the inner face of the tire in the run-flat running can be made uniform.

In the air bladder for a safety tire according to the invention, the extended deformation portion is provided with a reinforcing layer and the reinforcing layer is made of one or more layers of a composite body of a fiber material with rubber.

According to the invention, the reinforcing layer is made of one or more layers of a composite body of a fiber material with rubber, so that the reinforcing layer can function as a tension supporting member, whereby the rubbing of the extended deformation portion of the air bladder with the inner peripheral face of the tread portion or the like through the action of centrifugal force or the like can be prevented in the ground contact zone of the tread during the normal running of the tire. On the other hand, if the pressure difference between the inside and the outside of the air bladder exceeds the predetermined value due to the reduction, losing and the like of the tire internal pressure, the extended deformation portion of the air bladder is extendedly deformed under the stretching deformation of the composite body to approximately equally close to the inner face of the tire over a whole thereof to thereby subrogate the support of the load from the tire with the air bladder while keeping the internal pressure to suppress the increase of the flexible deformation of the tire, whereby continuing safe running can be realized even upon puncture of the tire or the like.

According to the invention, the reinforcing layer in the crown region is made of one or more Layers of a composite body of a fiber material and rubber, and the fiber material is a non-woven fabric containing aramide fibers arranged in multi-directions.

According to the invention, the non-woven fabric containing aramide fibers arranged in multi-directions is used as the fiber material in the crown region, so that the curve of tensile force in the crown region of the extended deformation portion can be rendered into a shape changing from a sharp linear form in the vicinity of the predetermined elongation to a generally flat curved form.

Also according to the invention, the reinforcing layer in the side region is made of one or more layers of a composite body of a fiber material and rubber, and the fiber material is a non-woven fabric containing nylon fibers or polyester fibers arranged in multi-directions.

According to the invention, the non-woven fabric containing nylon fibers or polyester fibers arranged in multi-directions is used as the fiber material in the side region, so that the curve of tensile force in the side region of the extended deformation portion can be rendered into an upward sloping shape smoothly increasing with the increase of the elongation.

The reinforcing layer is preferably attached to an outside of a rubber tube body having a hollow toric from, so that the air bladder can be produced simply.
The invention will be further described with reference to one accompanying drawings, in which:

FIG. 1 is a cross sectional view showing a state of assembling a safety tire provided with an air bladder according to an embodiment of the invention onto a rim;
FIG. 2 is a view showing a form of a curve of tensile force in an extended deformation portion;
FIG. 3 is a view showing a form of a curve of tensile force in an uncured material of a non-woven fabric layer;
FIG. 4 is a cross sectional view of a conventional air bladder;
FIG. 5 is a view showing a form of a curve of tensile force in an extended deformation portion of the conventional air bladder;
FIG. 6 is a partially cutaway view in perspective of a concrete shaping example of a reinforcing layer in the conventional air bladder; and
FIG. 7 is a graph showing a curve of tensile force in a crown region and a side region with respect to air bladders of a Conventional Example and Examples 1 and 2, respectively.

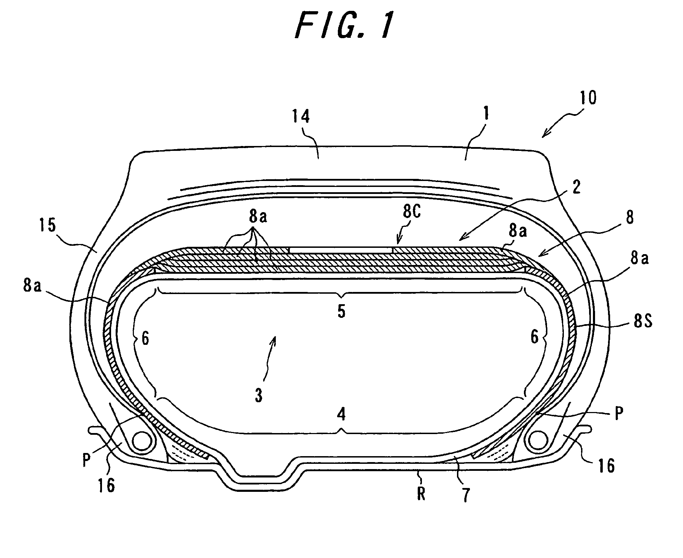

An embodiment of the invention will be described with reference to the accompanying drawings below. In FIG. 1 is shown a cross sectional view showing a state of assembling a safety tire provided with an air bladder according to an embodiment of the invention onto a rim, wherein numeral 10 is a whole safety tire. The safety tire 10 is a combination of a tire 1 and an air bladder 2 housed therein. The tire 1 is the same as a general pneumatic tire and comprises a tread portion 14, a pair of sidewall portions 15 communicating with both sides of the tread portion, and bead portions 16 arranged on inner peripheral sides of the sidewall portions 15.

The safety tire 10 is used by assembling the tire 1 onto a standard rim R and filling a predetermined internal pressure into the tire 1 through a valve and also filling an internal pressure higher than the internal pressure for the tire 1 into an interior of the air bladder 2.

The air bladder 2 can be divided at its cross section into an extended deformation portion 3 and a non-deformation portion 4 bordering a point P located in the vicinity of the bead portion 16 of the tire 1. The extended deformation portion 3 is a portion not contacting with an inner face of the tire 1 at a state of running under loading in the presence of the predetermined internal pressure of the tire 1 or during so-called normal running but extendedly deforming in circumferential and widthwise directions during so-called run-flat running such that a pressure difference between the inside and the outside of the air bladder 2 exceeds the predetermined value due to the decrease or losing of the tire internal pressure to thereby close to the inner face of the tire 1 over approximately the whole thereof, while the non-deformation portion 4 is a portion closing to inner faces of the tire 1 and the rim R to surely fix the air bladder 2 to the standard rim R in either the normal running or the run-flat running.

Also, the extended deformation portion 3 can be divided into a crown region 5 opposing to an inner face of the tread portion 14 in the tire and a side region 6 at least opposing to an inner face of the sidewall portion in the tire. In the run-flat running, the crown region 5 is closed to the inner face of the tread portion 14 and the side region 6 is closed to the inner face of the sidewall portion 15, whereby the air bladder 2 functions as in the conventional tire tube to subrogate the support of the load from the tire 1 while suppressing the flexible deformation of the tire 1 to a small level, and hence continued safe running can be realized upon puncture of the tire 1 or the like.

The air bladder 2 comprises a rubber tube body 7 having a hollow toric form and made of a soft rubber and a reinforcing layer 8 attached to an outside of the rubber tube body 7. A reinforcing layer 8C located in the crown region 5 is constructed by laminating a plurality of non-woven fabric layers 8a each formed by coating a non-woven fabric made of aramide fibers or the like with rubber, and a reinforcing layer 8S located in the side region 6 is constructed by using only one non-woven fabric layer 8 formed by coating a non-woven fabric made of a material different from that used in the crown region 5 being nylon fibers or polyester fibers with rubber.

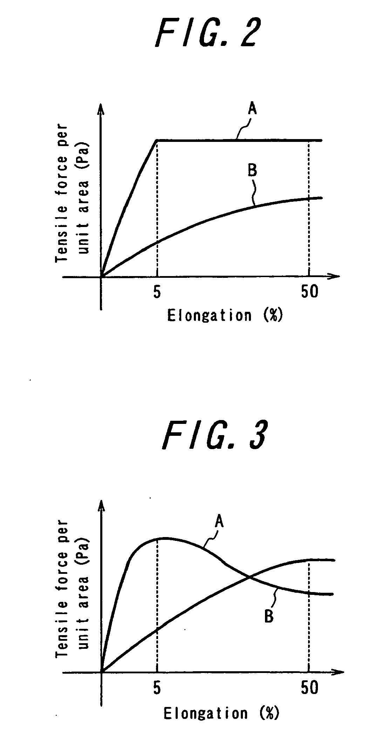

FIG. 2 is a graph showing a curve of tensile force to elongation in the extended deformation portion 3 having the above constructed reinforcing layer 8 in which an abscissa is an elongation and an ordinate is a tensile force per unit sectional area. The curve A of tensile force corresponds to the crown region 5 of the extended deformation portion 3 and the curve B of tensile force corresponds to the side region 6 of the extended deformation portion 3. The curve A has a shape substantially changing in a form as shown within an elongation range up to an elongation of 50%. Concretely, as to the extended deformation portion 3 of the air bladder 2, an average gradient of the tensile force to an elongation of 0-5% expanding based on the supply of the internal pressure to the air bladder 2 is made larger than an average gradient of the tensile force to an elongation of 5-50% extendedly deforming the extended deformation portion 3 accompanied with the lowering of the tire internal pressure.

On the other hand, the curve B has a shape smoothly increasing accompanied with the increase of the elongation within an elongation range up to an elongation of 50%. A ratio of the average gradient of the tensile force to the elongation of 0-5% to the average gradient of the tensile force to the elongation of 5-50% is smaller in the curve B than in the curve A.

According to this construction, since the increasing ratio of the tensile force to the elongation in the extended deformation portion 3 of the air bladder 2 is large at the crown region in the normal running of the tire 1, a large force against centrifugal force or the like can be given to the extended deformation portion, whereby the contact of the air bladder 2 with the inner face of the tread portion 14 is prevented to ensure the durability in the normal running. On the other hand, when the extended deformation portion is extendedly deformed due to a puncture of the tire or the like at an elongation exceeding 5%, the extended deformation portion 3 and hence the air bladder 2 can be sufficiently uniformly contacted with the whole of the inner face of the tire by smoothly and gently deforming the extended deformation portion 3 of the air bladder 2 with a small increasing ratio of the tensile force to the elongation.

On the contrary, the function of preventing the contact of the air bladder 2 with the inner face of the tire in the normal running and the function of closing to the tire in the run-flat running are required at the side region likewise the crown region, but the requiring degree thereof is low as compared with the crown region. Rather, it is important to improve the productivity in the formation of the uncured non-woven fabric layer 8a by winding the strip as previously mentioned, which was the problem in the conventional technique.

FIG. 3 is a graph showing a curve of tensile force to elongation in the uncured non-woven fabric layer 8a to be attached to the uncured rubber tube body 7, in which the curve A of tensile force corresponds to the non-woven fabric layer 8a constituting the reinforcing layer 8C in the crown region 5 and the curve B of tensile force corresponds to the non-woven fabric layer 8a constituting the reinforcing layer 8S in the side region 6. Even in the uncured state, the curve B has a smoothly upward sloping shape, and hence when the uncured reinforcing layer 8S is formed by winding the strip in the circumferential direction, the tension required to the strip due to the difference of the elongation in the widthwise direction of the strip during the winding of the strip can be largely reduced to shorten the time required in the winding of the strip to thereby improve the productivity.

Moreover, the standard rim described in the above explanation means a rim standardized in JATMA YEAR BOOK, ETRTO STANDARD MANUAL, TRA (THE TIRE and RIM ASSOCIATION INC.) YEAR BOOK and the like. Typifying JATMA YEAR BOOK, the standard rim corresponds to an approved rim described in General Information. Also, the gas filling the tire 1 and the air bladder 2 may be a gas such as an inert gas and the like other than air.

As a fiber material used in the non-woven fabric layer 8a may be mentioned synthetic fiber materials represented by polyester, polyamide and polyvinyl alcohol, and one or more of natural fibers such as rayon, cellulose and the like. Fiber materials other than the above may also be used. Furthermore, fibers having a two-layer structure of an inner layer and an outer layer made from different materials can be used as a material for the non-woven fabric.
Moreover, rubber for the non-woven fabric layer 8a penetrates or enters between the fibers through heat or pressure in the vulcanization step, so that it is not generally required to conduct a special treatment for the non-woven fabric such as application of an adhesive or the like. If a stronger adhesion force is required, however, the treatment such as application of an adhesive or the like can be conducted. In any case, the rubber preferably has a 50% modulus at 25°C of 2-9 MPa and a 100% modulus of 40-150 MPa for attaining the shape of the air bladder 2 and the smooth extended deformation thereof.
The invention will be further described with reference to the following illustrative Examples.

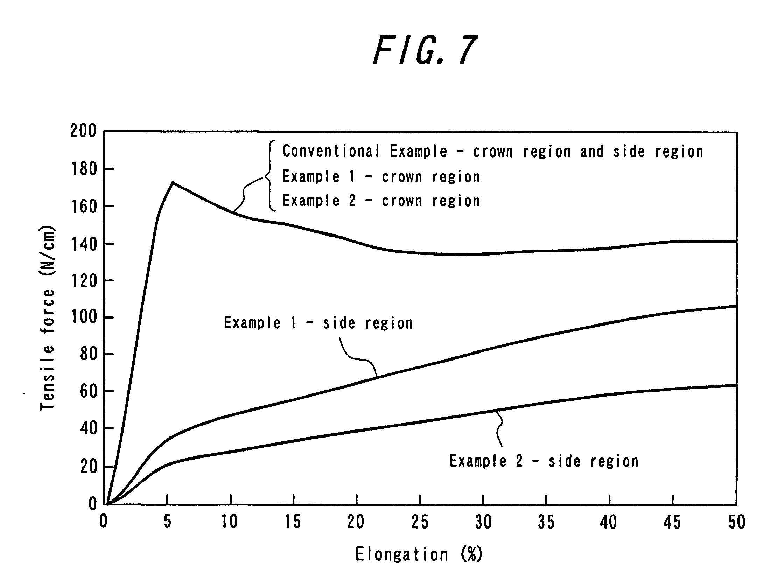

In the air bladder 2 having a structure shown in FIG. 1, the reinforcing layer 8C in the crown region 5 comprises four non-woven fabric layers and the reinforcing layer 8C in the side region 6 comprises one non-woven fabric layer 8a. There are prepared three air bladders of a Conventional Example and Examples 1, 2 by changing the fiber material in the non-woven fabric constituting each of these non-woven fabric layers 8a, and the productivity in the shaping, cost of starting materials in the air bladder, and creep performance and uniform extending performance as a product performance are evaluated with respect to each of these air bladders to obtain results as shown in Table 1. Also, samples having the same structure and material as in strips cut out from the crown region and side region of each of the air bladders are prepared, and tensile forces thereof to elongations in circumferential direction are measured. FIG. 7 shows a curve of tensile force measured on each of these samples in which an ordinate is a tensile force per unit width of the sample.

In the air bladders of Example 1, Example 2 and the Conventional Example, all of the non-woven fabric layers 8a in the crown region 5 are made of aramide fibers, and the non-woven fabric layer 8a in the side region 6 is made of polyester fibers in Example 1, nylon fibers in Example 2 and aramide fibers in the Conventional Example, respectively. The specification of the non-woven fabric in these non-woven fabric layers made of aramide fibers, polyester fibers and nylon fibers is shown in Table 2. The tire using these air bladders has a tire size of 495/45R22.5.

**Table 1**

| | Productivity in shaping | Starting material cost | Creep controlling performance | Uniform extending performance |
|---|---|---|---|---|
| Conventional Example | 100 | 100 | 100 | OK |
| Example 1 | 170 | 90 | 98 | OK |
| Example 2 | 190 | 85 | 90 | OK |

**Table 2**

| Main material of non-woven fabric | Maker | Maker's model number | Basis weight (g/m²) |
|---|---|---|---|
| Aramide fiber | Japan Vilene Co., Ltd. | Tecnola | 50 |
| Polyester fiber | Japan Vilene Co., Ltd. | LMW-9004 | 40 |
| Nylon fiber | Japan Vilene Co., Ltd. | CV-9865 | 65 |

In Table 1, each of the productivity in shaping, starting material cost and creep controlling performance is represented by an index on the basis that Conventional example is 100. In this case, the productivity in shaping is represented by an index of a time required for shaping one air bladder, and the starting material cost is represented by an index of the cost of starting materials required for one air bladder, and the creep controlling performance is represented by an index of an increasing ratio of a tire diameter after the tire is run on a drum at a speed of 60 km/h over 10000 km to a tire diameter of initial state. Also, the uniform extending performance is evaluated by observing whether or not a vehicle can be stopped without dissembling the tire from the rim when the vehicle provided with the tires of each example is actually run on a circuit course having a radius of 75 m at a speed of 50 km/h and full braking operation is carried out immediately after the air bladder is broken by an explosive previously set inside the air bladder during the running in which "OK" is a case of stopping the vehicle and "NG" is a case of not stopping the vehicle.

As seen from FIG. 7, in the air bladders of Examples 1 and 2, the curve of tensile force in the crown region has a shape as shown and the curve of tensile force in the side region has a smoothly upward sloping shape, which belong to those defined in the invention. As seen from Table 1, as to the product performances in Examples 1 and 2, the productivity in the shaping can be largely improved without sacrificing the uniform extending performance, and also the starting material cost can be highly reduced.

As mentioned above, according to the invention, the air bladder 2 can be produced while maintaining the high productivity because the curve of tensile force to the elongation up to an elongation of 50% has a shape changing from a sharp linear form in the vicinity of an elongation of 5% to a generally flat curved form in the crown region 5 of the extended deformation portion 3 and an upward sloping shape smoothly increasing with the increase of the elongation in the side region 6 thereof, and the extended deformation portion 3 does not contact with the inner face of the tire during the normal running of the tire and can equally close to the inner face of the tire during the run-flat running to efficiently support the load.

## Claims

1. An air bladder (2) for a safety tire (10) having a hollow toric form as a whole and housed in a tire (1) and filled with an internal pressure and extendedly deforming based on the lowering of a tire internal pressure to subrogate the support of a load from the tire, in which an extended deformation portion (3) of the air bladder comprises a crown region (5) opposing to an inner face of a tread portion (14) of the tire and a side region (6) at least opposing to an inner face of a sidewall portion (15) of the tire, and a curve of tensile force to an elongation in a circumferential direction up to an elongation of 50% has a shape changing from a sharp linear form in the vicinity of an elongation of 5% to a generally flat curved form in the crown region (5) of the extended deformation portion (3) and an upward sloping shape smoothly increasing with the increase of the elongation in the side region (6) thereof;
wherein the extended deformation portion (3) of the air bladden is provided with a reinforcing layer (8C) in the crown region (5) made of one or more layers (8a) of a composite body of a fiber material and rubber, wherein the fiber material is a non-woven fabric containing aramide fibers arranged in multi-directions, and with
a reinforcing layer (8S) in the side region (6) made of one or more layers of a composite body of a fiber material and rubber, wherein the fiber material is a non-woven fabric containing nylon fibers or polyester fibers arranged in multi-directions.

2. An air bladder for a safety tire as claimed in claim 1, wherein the reinforcing layers (8C,8S) are attached to an outside of a rubber tube body (7) having a hollow toric form.

## Patentansprüche

1. Luftschlauch (2) für einen Sicherheitsreifen (10) mit einer hohlen torischen Form als Ganze und aufgenommen in einem Reifen (1) und gefüllt mit einem Innendruck, und der sich ausdehnend verformt, basierend auf der Absenkung eines Reifeninnendruckes, um die Aufnahme einer Last vom Reifen übergehen zu lassen, wobei ein ausgedehnter Verformungsabschnitt (3) des Luftschlauches einen Scheitelbereich (5), der einer Innenfläche eines Laufflächenabschnittes (14) des Reifens entgegengesetzt ist, und einen Seitenbereich (6) aufweist, der mindestens einer Innenfläche eines Seitenwandabschnittes (15) des Reifens entgegengesetzt ist, und wobei eine Kurve der Zugkraft über einer Dehnung in einer Umfangsrichtung bis zu einer Dehnung von 50 % eine Form aufweist, die sich von einer steilen linearen Form in der Nähe einer Dehnung von 5 % bis zu einer im Allgemeinen flachen, gebogenen Form im Scheitelbereich (5) des ausgedehnten Verformungsabschnittes (3) und einer nach oben schräg verlaufenden Form verändert, die mit der Zunahme der Dehnung in dessen Seitenbereich (6) gleichmäßig zunimmt;
wobei der ausgedehnte Verformungsabschnitt (3) des Luftschlauches mit einer Verstärkungsschicht (8C) im Scheitelbereich (5), die aus einer oder mehr Schichten (8a) eines Verbundkörpers aus einem Fasermaterial und Gummi besteht, wobei das Fasermaterial ein Vliesstoff ist, der Aramidfasern enthält, die in mehreren Richtungen angeordnet sind, und mit
einer Verstärkungsschicht (8S) im Seitenbereich (6) versehen ist, die aus einer oder mehr Schichten eines Verbundkörpers aus einem Fasermaterial und Gummi besteht, wobei das Fasermaterial ein Vliesstoff ist, der Nylonfasern oder Polyesterfasern enthält, die in mehreren Richtungen angeordnet sind.

2. Luftschlauch für einen Sicherheitsreifen nach Anspruch 1, bei dem die Verstärkungsschichten (8C, 8S) an einer Außenseite eines Gummischlauchkörpers (7) mit einer hohlen torischen Form angebracht sind.

## Revendications

1. Vessie d'air (2) pour un pneu de sécurité (10) ayant dans l'ensemble une forme torique creuse et logée dans un pneu (1) et remplie avec une pression intérieure, et se déformant par extension suite à l'abaissement d'une pression intérieure du pneu pour assurer à la place du pneu le support d'une charge, dans laquelle une partie de déformation en extension (3) de la vessie d'air comprend une zone de sommet (5) faisant face à une face intérieure d'une partie de bande de roulement (14) du pneu et une zone latérale (6) faisant face au moins à une face intérieure d'une partie de flanc (15) du pneu, et une courbe de la force de traction par rapport à un allongement dans une direction circonférentielle jusqu'à un allongement de 50% a une forme changeante passant d'une forme linéaire abrupte au voisinage d'un allongement de 5% à une forme courbe aplatie dans la zone de sommet (5) de la partie de déformation en extension (3) et une forme à pente montante douce augmentant à mesure que l'allongement dans la zone latérale (6) augmente ;
dans laquelle la partie de déformation en extension (3) de la vessie d'air est pourvue d'une couche de renfort (8C) dans la zone de sommet (5), formée d'une ou plusieurs couche/s (8a) d'un corps composite en matériau fibreux et caoutchouc, dans laquelle le matériau fibreux est un non-tissé contenant des fibres d'aramide agencées dans de multiples directions et
est pourvue d'une couche de renfort (8S) dans la zone latérale (6), formée d'une ou plusieurs couche/s d'un corps composite en matériau fibreux et caoutchouc, dans laquelle le matériau fibreux est un non-tissé contenant des fibres de nylon ou des fibres de polyester agencées dans de multiples directions.

2. Vessie d'air pour un pneu de sécurité selon la revendication 1, dans laquelle les couches de renfort (8C, 8S) sont fixées sur un extérieur d'un corps tubulaire en caoutchouc (7) ayant une forme torique creuse.
